# EUROPEAN PATENT APPLICATION

(11) **EP 4 852 616 A1**
(43) Date of publication of application: **09.12.2026**
(21) Application number: 24709465.9
(22) Date of filing: 01.02.2024
(51) Int. Cl.: H05B 3/74

(54) **RADIANT HEATER ADAPTED TO A COOKING APPLIANCE**

(71) Applicant: EIKA, S.COOP., 48277 Etxebarria (ES)
(72) Inventor: DE LA TORRE ABAUNZA, Asier, 48200 DURANGO (Bizkaia) (ES); DE LOS TOYOS LÓPEZ, Daniel, 20206 EIBAR (Gipuzkoa) (ES); LOPEZ BERRIOZABALGOITIA, Enaitz, 48340 AMOREBIETA-ETXANO (Bizkaia) (ES)
(74) Representative: Galbaian S.Coop.
(86) International application number: PCT/ES2024/070057
(87) International publication number: WO 2025/163217

(57) **Abstract**

Radiant heater adapted to a cooking appliance, comprising an insulating base (2), an insulating ring (3) arranged on the insulating base (2), at least one radiant heating element fixed to the insulating base (2), and a metal casing (4) at least partially housing the insulating base (2). The ratio between the mass of the insulating ring (3) and an outer diameter of the insulating ring (2) is less than 0,35 g/mm.

## Description

### TECHNICAL FIELD

The present invention relates to a radiant heater adapted to a cooking appliance.

### PRIOR ART

Cooking appliances are known in the state of the art which comprise radiant heaters each comprising a substantially cylindrical insulating base on which at least one heating element is fixed, an insulating ring which is arranged on the insulating base, and a metal housing which contains the insulating base and part of the insulating ring.

The radiant heaters include a safety device which is sometimes placed across the insulating ring on the corresponding resistor. In other cases, as in the case described in EP4269877A1, the temperature sensor is placed on a support arranged orthogonally to the insulating base, thus obtaining a more compact radiant heater.

### DISCLOSURE OF THE INVENTION

The object of the invention is to provide a radiant heater adapted to a cooking appliance, as defined in the claims.

The radiant heater according to the invention comprises an insulating base, an insulating ring arranged on the insulating base, at least one radiant heating element fixed to the insulating base, a metal casing at least partially housing the insulating base. The ratio between the mass of the insulating ring and the outer diameter of the insulating ring is less than 0,35 g/mm.

Initially, in this type of radiant heater, a lot of energy has to be invested in heating the thermal insulation itself at the moment of ignition. This slows down the heating of the heating pot above the radiant heater at the moment of ignition or the initial heating phase. By reducing the height of the insulating ring, the weight of the insulating ring is reduced, thus reducing the thermal insulation of the radiant heater. In this way, the heat absorption of the insulating ring during the initial heating phase of a pot on the glass ceramic plate over the respective radiant heater is reduced, while maintaining the mechanical properties required of this type of insulating ring. By reducing the height of the insulating ring and therefore also the height of the metal casing, the heating element is placed closer to the glass ceramic plate, which also improves the performance of the radiant heater in the initial phase as well as in the other phases.

On the other hand, the radiant heater according to the invention is a more volume-optimised heater, which also saves money in terms of transport and allows for a more space-saving and space-saving design of the cooking appliance when integrated into the kitchen.

These and other advantages and features of the invention will become apparent in view of the figures and the detailed description of the invention.

### DESCRIPTION OF THE DRAWINGS

Figure 1 shows a perspective view of a radiant heater according to the invention.
Figure 2 shows a sectional view of the radiant heater shown in figure 1 mounted under a glass ceramic hob.
Figure 3 shows a comparative graph of the energy consumption of a standard radiant heater and a radiant heater according to the invention.

### DETAILED DISCLOSURE OF THE INVENTION

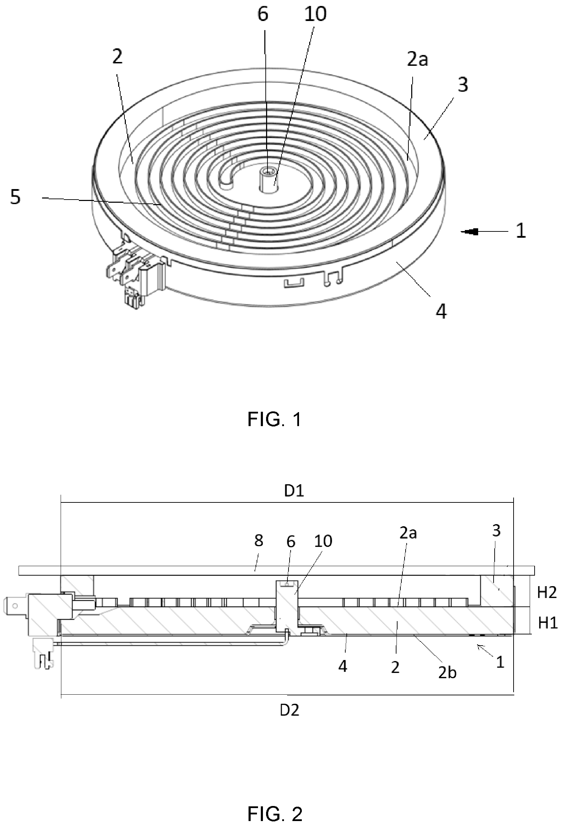

Figures 1 and 2 show a radiant heater 1 according to the invention arranged under a glass ceramic hob 8, shown in figure 2, of a cooking appliance.

The radiant heater 1 comprises an insulating base 2 having a substantially flat support surface 2a on which at least one heating element 5 is fixed, an insulating ring 3 resting on the insulating base 2, and a metal casing 4 which houses the insulating base 2 and partially the insulating ring 3. The casing 4 is adapted to the outer geometry of the insulating base 2 and the insulating ring 3.

The insulating base 2 comprises a bottom surface 2b arranged opposite the metal casing 4, the supporting surface 2a and the bottom surface 2b being substantially flat and parallel to each other.

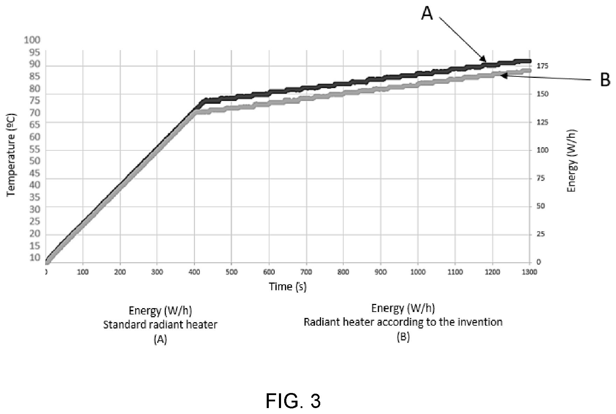

The ratio between the mass of the insulating ring 3 measured in grams and the external diameter D2 of the insulating ring 3 measured in millimetres is less than 0.35. Thus, by reducing the height of the insulating ring 3, the weight of the insulating ring 3 is reduced, thereby reducing the thermal insulation of the radiant heater 1. In this way, the heat absorption of the insulating ring 3 during the initial heating phase (shown in figure 3) of a pan placed on the glass ceramic plate 8 over the respective radiant heater 1 is reduced, while maintaining the mechanical properties required of this type of insulating ring. By reducing the height of the insulating ring 3 and thus also the height of the metal casing 4, the heating element 5 is placed closer to the glass ceramic plate 8, which also improves the performance of the radiant heater 1 in the initial phase as well as in the other phases.

In one embodiment, the insulating ring 3 has a maximum height H2 of 12 mm and a minimum height of 11 mm, the insulating ring 3 meeting the thermal and mechanical requirements of its function.

On the other hand, the ratio between the mass of the insulating base 2 and the outer diameter D1 of the insulating base 2 is greater than 0.3 g/mm and less than 0.7 g/mm, the maximum total height H1 of the insulating base 2 being 11 mm. In this way, the heat absorption of the insulating base 2 during the initial heating phase of a pot placed on the glass ceramic plate 8 over the corresponding radiant heater 1 is reduced, while maintaining the mechanical properties required of the insulating bases. By reducing the weight and height of the insulating base 2, the weight of the metal casing 4 which houses the insulating base 2 and which also absorbs heat during the initial phase is also reduced. In addition, the metal casing 4, once thermal equilibrium has been reached after the initial heating phase, radiates heat to the outside. Reducing the size of the metal casing 4 also reduces the area of heat radiation to the outside, improving the performance of the radiant heater 1.

The total height H1 of the insulating ring means the greatest distance between two parallel surfaces of insulating base 2. Thus, in the embodiment shown in the figures in which the insulating ring 3 rests on the supporting surface 2a of the insulating base 2, the total height H1 of the insulating base 2 is the distance between the supporting surface 2a and the lower surface 2b of the insulating base 2.

In other embodiments in which the insulating ring 3 is arranged on another surface of the insulating base 2 parallel to the support surface 2a and arranged separately protruding a height with respect to the support surface 2a, the total height H1 of the insulating base 2 would be the distance between the surface of the insulating base 2 protruding with respect to the support surface 2a and the bottom surface 2b.

In other embodiments in which the insulating ring 3 is arranged on another surface of the insulating base 2 parallel to the support surface 2a and arranged below the support surface 2a, the total height H1 of the insulating base 2 would be the distance between the support surface 2a and the bottom surface 2b of the insulating base 2.

In one embodiment, the minimum overall height H1 of the insulating base 2 is 8 mm. The insulating base 2 is also substantially cylindrical.

Figure 3 shows a comparative graph of the energy consumption of a radiant heater according to the state of the art (hereinafter referred to as the standard radiant heater) and a radiant heater according to the invention. This graph represents the initial heating phase, also known as the boiling period, which shows the energy required to bring the temperature of the water in a pot on a glass ceramic hob up to 90 °C. As can be seen in the graph, the energy consumption of a standard radiant heater represented by line A is approximately 5% higher than the energy consumption of radiant heater 1 according to the invention.

The heating element 5 is a radiant heating element, mainly an electrical resistance. The insulating base 2 is made of a uniform microporous material, which is thermally insulating, has good mechanical properties and is resistant to moisture absorption. Insulating ring 3 is made of thermally insulating material that has good mechanical properties as well as high temperature resistance. Insulating ring 3 is made of a denser material than insulating base 2 due to the mechanical requirements to which it is subjected, which means that it has higher thermal losses.

In one embodiment, the density of the insulating base 2 is within a range of 320 to 380 kg/cm², preferably within a range of 340 to 370 kg/cm² and the density of the insulating ring 3 is within a range of 650 to 900 kg/cm², preferably between a range of 725 to 850 kg/cm² .

The insulating base 2 is made of a material comprising 30-85 wt.% total weight of fumed silica, 0-50 wt.% total weight of opacifier, and 0.5-10 wt.% total weight of fibres.

Preferably, the insulating base is made of a material comprising 35-70 wt.% total weight of fumed silica, 10-40 wt.% total weight of opacifier, and 1-6 wt.% total weight of fibres.

The insulating ring 3 is made of a material comprising 10-50 wt.% total weight of fumed silica, 30-70 wt.% total weight of metal oxide, 15-40 wt.% total weight of inorganic binder, 0-30 wt.% total weight of opacifier, and 0-4 wt.% total weight of fibres. The metal oxide can be vermiculite and/or perlite.

Preferably, the insulating ring 3 is made a material comprising 20-45 wt.% total weight of fumed silica, 35-60 wt.% total weight of metal oxide, 15-30 wt.% total weight of inorganic binder, 0.5-3 wt.% total weight of fibres, and 0-20 wt.% total weight of opacifier.

Finally, the radiant heater 1 comprises a temperature sensor 6 adapted to measure the temperature inside the radiant heater 1, and a support 10 extending substantially orthogonal to the insulating base 2 and supporting the temperature sensor 6.

## Claims

1. Radiant heater adapted to a cooking appliance, comprising an insulating base (2), an insulating ring (3) arranged on the insulating base (2), at least one radiant heating element (5) fixed to the insulating base (2), and a metal casing (4) at least partially housing the insulating base (2), **characterised in that** the ratio between the mass of the insulating ring (3) and an outer diameter of the insulating ring (2) is less than 0,35 g/mm.

2. Radiant heater according to the preceding claim, wherein the height (H2) of the insulating ring (3) is less than 12 mm.

3. Radiant heater according to any of the preceding claims, wherein the ratio between the mass of the insulating base (2) and an outer diameter of the insulating base (2) is greater than 0.3 gr/mm and less than 0.7 gr/mm, the total height (H1) of the insulating base (2) being less than 11 mm.

4. Radiant heater according to any of the preceding claims, wherein the insulating base (2) has a minimum total height (H1) of 8 mm.

5. Radiant heater according to any of the preceding claims, wherein the insulating base (2) has a density between 320 and 380 kg/cm², preferably between 340 and 370 kg/cm².

6. Radiant heater according to any of the preceding claims, wherein the insulating ring (3) has a density between 650 and 900 kg/cm², preferably between 725 and 850 kg/cm².

7. Radiant heater according to any of the preceding claims, wherein the insulating base (3) is made of a material comprising 30-85% by weight total weight of fumed silica, 0-50% by weight total weight of opacifier, and 0-10% by weight total weight of fibre.

8. Radiant heater according to any of the preceding claims, wherein the insulating ring (3) is made of a material comprising 10-50 wt.% total weight of fumed silica, 30-70 wt.% total weight of metal oxide, 15-40 wt.% total weight of inorganic binder, 0-30 wt.% total weight of opacifier, and 0-4 wt.% total weight of fibre.

9. Cooking appliance comprising a glass ceramic hob (8) and at least one radiant heater (1) according to any of the preceding claims, the radiant heater (1) being arranged under the glass ceramic hob (8).
